# FASCICULE DE BREVET EUROPEEN

(11) **EP 1 902 623 B1**
(45) Date de publication et mention de la délivrance du brevet: **03.08.2011**
(21) Numéro de dépôt: 07301381.5
(22) Date de dépôt: 19.09.2007
(51) Int. Cl.: A22C 17/00, A23P 1/00

(54) **Machine pour la fabrication automatique de brochettes**
Maschine zur automatischen Herstellung von Bratspießen
Machine for automatic skewer production

(30) Priorité: 19.09.2006 FR 0653805
(43) Date de publication de la demande: 26.03.2008
(73) Titulaire: Emsens Antoine, 42490 Fraisses (FR)
(72) Inventeur: Paya, Denis, 42380 Périgneux (FR)
(74) Mandataire: Thivillier, Patrick

(56) Documents cités:
- DE-B1- 2 119 017
- DE-B1- 2 553 476
- DE-B1- 2 608 687
- FR-A1- 2 725 591
- US-A- 4 842 181

## Description

L'invention se rattache au secteur technique des machines pour le traitement de produits alimentaires, notamment des machines pour la fabrication automatique de brochettes de viandes et/ou de légumes ou autres.

Il est connu d'utiliser, pour la fabrication des brochettes, d'une manière industrielle, des machines permettant d'effectuer l'embrochement et la découpe, d'une manière automatique ou semi-automatique. Plus particulièrement, l'invention concerne une machine du type de celle définie dans le brevet FR 2.725.591.
Selon l'enseignement de ce brevet, la machine comprend des plaques accouplées entre elles et présentant des empreintes aptes à recevoir les ingrédients nécessaires à l'élaboration de la brochette en tant que telle. Ces plaques sont accouplées entre elles, de manière à constituer un convoyeur sous forme d'une chaîne sans fin. L'ensemble du convoyeur est assujetti à des organes de commande pour amener successivement pas à pas les plaques en regard d'au moins un poste d'embrochement apte à engager une broche dans les ingrédients positionnés dans les empreintes des plaques.
A noter que chaque empreinte est de forme générale sensiblement rectangulaire délimitant un volume apte être garni des ingrédients souhaités : viandes, légumes, fruits, .... Les dimensions de l'empreinte, notamment sa longueur, sa largeur, sa profondeur, et éventuellement sa forme géométrique, sont déterminées en fonction du type de brochettes que l'on souhaite obtenir.

La solution définie par l'enseignement de ce brevet permet donc d'automatiser la fabrication des brochettes incluant, dans leur composition, une combinaison quelconque de différents morceaux de viandes, de légumes, de fruits et autres, et ce quelles que soient leur dimensions.

A partir de cette conception de base, un des problèmes que se propose de résoudre l'invention est d'améliorer l'éjection et l'évacuation des brochettes, d'une manière progressive, afin de ne pas altérer la qualité de la brochette.
Un autre problème que se propose de résoudre l'invention est d'améliorer la flexibilité afin de pouvoir réaliser des brochettes de différentes dimensions.

Pour résoudre ces différents problèmes, il a été conçu et mis au point une machine du type de celle comprenant, d'une manière connue, un convoyeur sous forme d'une chaîne sans fin composée de plaques accouplées entre elles de manière articulée et présentant des empreinte aptes à recevoir des ingrédients. L'ensemble du convoyeur est assujetti à des organes de commande et de transfert pour amener successivement, pas à pas, les empreintes au regard de moyens d'embrochement aptes à engager une broche dans chacune desdites empreintes en traversant les ingrédients.

Selon l'invention, chaque empreinte résulte de l'accouplement articulé d'au moins deux plaques juxtaposées présentant chacune au moins une demi-empreinte de sorte que, sous un effet de changement de plan, l'empreinte s'ouvre, permettant, d'une manière concomitante, l'éjection de la brochette en combinaison avec des moyens de transfert et d'évacuation.

Pour résoudre le problème posé de réaliser des empreintes aptes à s'ouvrir sous l'effet de changement de plan ou de direction, chaque plaque présente, d'une manière symétrique, deux demi-empreintes formées à partir des bords latéraux.

Pour résoudre le problème posé de permettre de réaliser l'opération d'embrochage en tant que telle, chaque demi empreinte est en communication, à chaque extrémité, avec des dégagements débouchants pour l'introduction des broches.

Pour résoudre le problème posé de permettre l'éjection des brochettes correspondant sensiblement à une action de démoulage, les moyens de transfert et d'éjection sont constitués par des courroies toriques sans fin montées dans des gorges formées transversalement dans le fond des empreintes à partir de l'extérieur des plaques. Les courroies sont assujetties à des organes motorisés d'entraînement. Les gorges sont de même profondeur ou de profondeurs différentes.

Pour résoudre le problème posé de soutenir temporairement les brochettes après leur démoulage correspondant à leur éjection, à l'une des extrémités du convoyeur correspondant à l'évacuation des brochettes, est monté un rouleau de renvoi coopérant avec les courroies au moyen de gorges. Le rouleau est disposé à un niveau inférieur à celui défini par le plan supérieur du convoyeur. Le rouleau est motorisé et peut être monté avec capacité de réglage en hauteur.

Pour résoudre le problème posé de permettre l'évacuation des brochettes démoulées en vue de leur transfert vers un poste de conditionnement par exemple, à partir du rouleau, sont disposées d'autres courroies en alignement avec celles du convoyeur pour permettre la réception et l'évacuation des brochettes éjectées sous l'effet de l'ouverture des empreintes.

Suivant une autre caractéristique, la machine présente des agencements pour l'adaptation et le montage de modules d'embrochage et/ou de coupe et/ou d'alimentation en broches.

L'invention est exposée ci-après plus en détail à l'aide des figures des dessins annexés dans lesquels :
- la figure 1 est une vue en perspective d'un exemple de réalisation de la machine selon l'invention ;
- la figure 2 est une vue en perspective montrant l'accouplement de deux plaques selon une forme de réalisation de l'invention, pour former une empreinte;
- la figure 3 est une vue en perspective correspondant à la figure 2 montrant l'ouverture de l'empreinte;
- la figure 4 est une vue en perspective montrant le principe d'éjection et d'évacuation des brochettes ;
- la figure 5 est une vue partielle en perspective et à une échelle plus importante montrant un détail pour l'éjection par démoulage des brochettes ;
- la figure 6 est une vue de face montrant la conception du convoyeur ;
- la figure 7 est une vue en plan correspondant à la figure 6 ;
- les figures 8 à 12 sont des vues en plan à caractère schématique, montrant différents exemple indicatifs nullement limitatifs, de différentes formes géométriques de produits à embrocher.

Comme indiqué, la machine à brochettes est du type de celle définie dans le brevet FR 2.725.591. Le principe à la base défini selon l'enseignement du brevet précité, est de pouvoir disposer dans des empreintes différents ingrédients : viandes, légumes, fruits, ..., et d'introduire, d'une manière automatique, semi-automatique ou manuelle, des broches (P) dans chacune des empreintes, en traversant, d'une manière concomitante, les ingrédients sélectionnés pour réaliser une brochette (B) en tant que telle.

Comme il sera indiqué dans la suite de la description, les empreintes dans lesquelles sont disposés les ingrédients, font partie d'un convoyeur (C) sous forme d'une chaîne sans fin.

D'une manière connue, l'ensemble de convoyeur est assujetti à des organes de commande et de transfert, pour amener successivement pas à pas, les empreintes au regard de moyens d'embrochement aptes à engager une broche (P) dans chacune des empreintes en traversant, comme indiqué, les ingrédients.

Les moyens d'embrochement sont de tout type connu et approprié. Par exemple, le système d'embrochement est équipé de moyens d'introduction des broches dans des tubes, ainsi que de moyens pouvant déplacer en translation l'ensemble de la broche et du tube, en vue de leur enfoncement dans les différents ingrédients positionnés dans les empreintes.

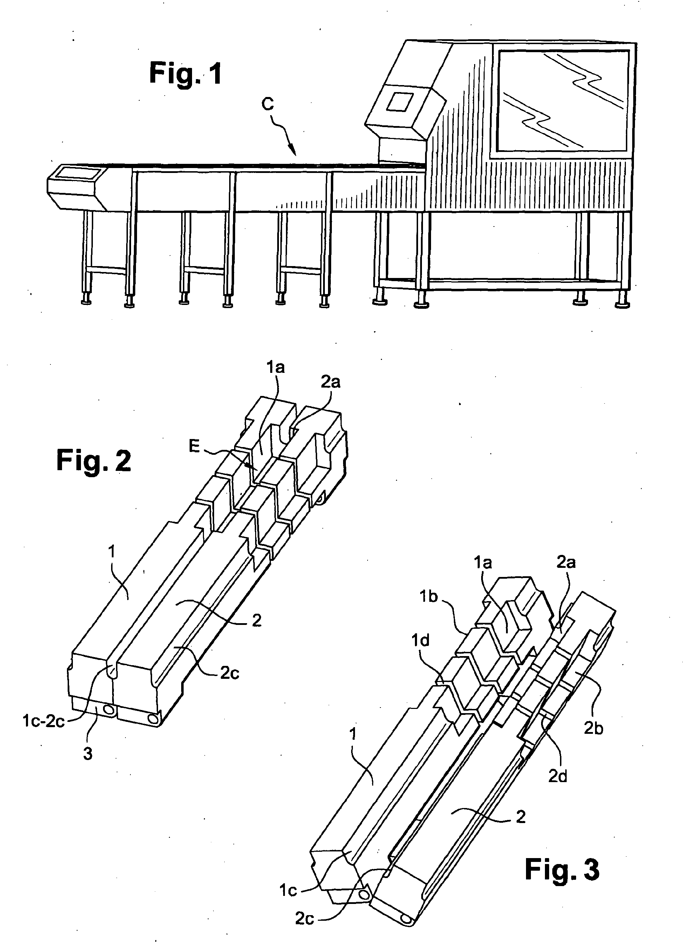

Selon une caractéristique à la base de l'invention, l'empreinte (E) résulte de l'accouplement articulé d'au moins deux plaques juxtaposées (1) et (2) présentant chacune au moins une demi-empreinte (1a), (2a). Sous un effet de changement de plan des deux plaques (1) et (2), l'empreinte (E) résultant dans l'exemple illustré figure 2 des demi-empreintes (1a) et (2a), s'ouvre, afin de permettre, comme il sera indiqué dans la suite de la description, l'éjection de la brochette (B) en combinaison avec des moyens de transfert et d'évacuation.

A la forme de réalisation illustrée aux figures 2 et 3, chaque plaque (1) et (2) présente, d'une manière symétrique, deux demi-empreintes (1a), (1b) et (2a), (2b) formées à partir des bords latéraux juxtaposés de l'ensemble des plaques.

A noter que les différentes plaques (1) et (2), quelle que soit leur forme de réalisation, peuvent être rapportées et fixées de manière démontable sur des éléments supports (3) constituant les maillons de la chaîne sans fin et coopérant, à chaque extrémité de l'ensemble de convoyeur, avec des rouleaux d'entraînement.

Selon une autre caractéristique, chaque demi-empreinte (1a) (1b) et (2a), (2b) est en communication, à chaque extrémité, avec des dégagements débouchant (1c), (2c) pour l'introduction des broches (P).

Selon une autre caractéristique, les moyens de transfert et d'éjection de brochettes sont constitués par des courroies sans fin (4), engagées dans des gorges (1d), (2d) formées transversalement dans le fond des empreintes à partir de l'extérieur des plaques. Les courroies sans fin (4), de section torique notamment, sont disposées sur la totalité de la longueur du convoyeur. A l'exemple illustré, chaque empreinte peut être traversée par trois courroies sans fin (4). Avantageusement, les courroies sans fin (4) sont assujetties à des organes motorisés d'entraînement.

A noter que, pour chacune de empreintes, les gorges (1d) et (2d) peuvent être de même profondeur ou de profondeurs différentes, afin de tenir compte des éventuelles différences de hauteur des ingrédients et/ou des broches.

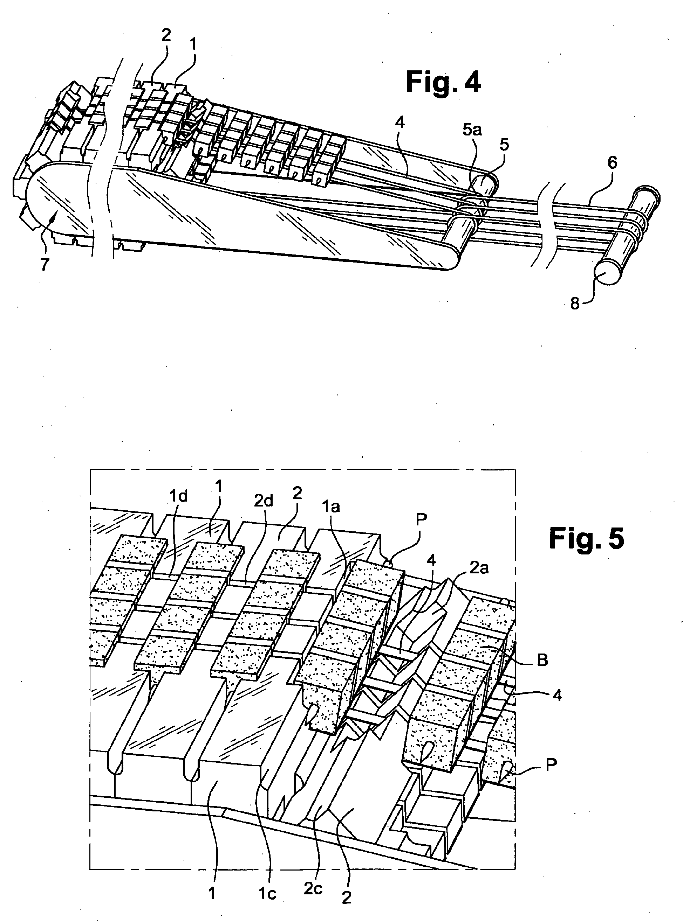

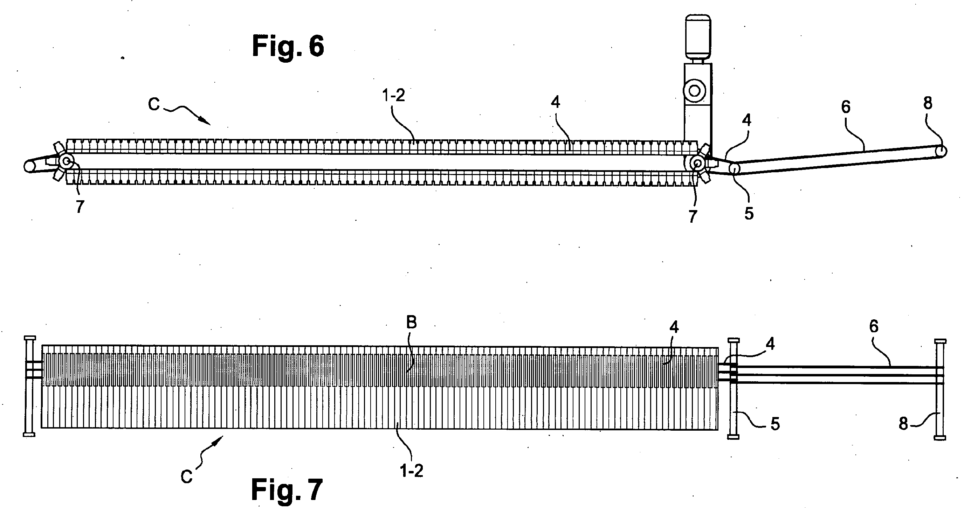

A l'une des extrémités du convoyeur, correspondant à l'évacuation des brochettes, est monté un rouleau de renvoi (5) coopérant avec les courroies (4) au moyen de gorges (5a). Le rouleau (5) est disposé à un niveau inférieur à celui défini par le plan supérieur du convoyeur (figures 4 et 6). En outre, ce rouleau (5) peut être monté avec capacité de réglage en hauteur.

Compte tenu de ces dispositions, il en résulte que, sous un effet de changement de plan de deux plaques juxtaposées (1) et (2) correspondant en l'espèce au retour du passage du plan supérieur au plan inférieur des plaques au niveau des rouleaux d'entraînement et de renvoi (7) du convoyeur, les plaques articulées (1) et (2) ont tendance à s'ouvrir correspondant à une ouverture concomitante des empreintes (1a), (2a) libérant ainsi la brochette (B) qui se trouve démoulée et maintenue en appui par les parties de courroie (4) situées entre l'extrémité du convoyeur et le rouleau d'extrémité de renvoi (5) (figures 4 et 5). Il n'y a donc pas d'éjection brusque de la brochette (B) qui se trouve progressivement libérée de l'empreinte et maintenue constamment en appui, au fur et à mesure de cette libération par les courroies toriques (4).

A partir du rouleau de renvoi (5), sont disposées d'autres courroies (6) en alignement avec les courroies (3) du convoyeur, pour permettre la réception et l'évacuation des brochettes démoulées sous l'effet de l'ouverture des empreintes, comme indiqué. On renvoie aux figures 4 et 6. Ces courroies (6) sont montées dans des gorges formées à côté de celles du rouleau (5) recevant les courroies (4) du convoyeur et dans d'autres gorges d'un rouleau (8).

Sans pour cela sortir du cadre de l'invention, la machine peut présenter des agencements pour l'adaptation et le montage de différents modules, notamment pour l'embrochage et/ou la coupe et/ou l'alimentation en broches.

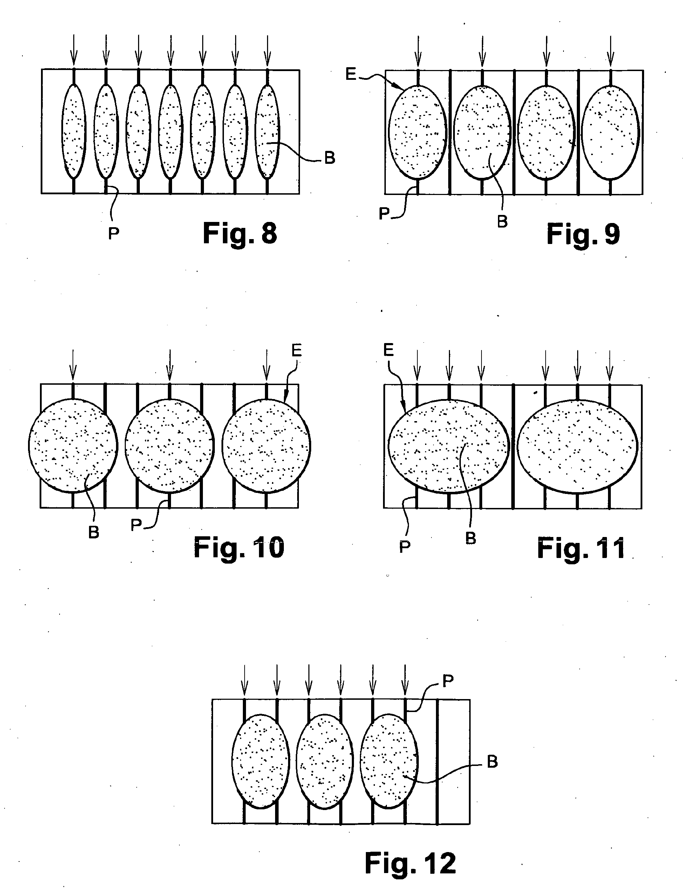

De même, compte tenu de l'interchangeabilité des différentes plaques, il est possible d'utiliser des plaques avec des empreintes totales ou partielles qui, après juxtaposition des plaques, vont correspondre à la forme des produits (B) à embrocher. On renvoie aux exemples indicatifs nullement limitatifs illustrés aux figures 8 à 12.

Les avantages ressortent bien de la description, en particulier on souligne et on rappelle l'efficacité du démoulage des brochettes sans aucun risque d'abîmer les ingrédients.

Bien évidemment, l'ensemble de la machine est équipé d'un système permettant d'automatiser, en totalité ou en partie, les différents postes de travail.

## Revendications

1. Machine pour la fabrication automatique de brochettes (B) comprenant un convoyeur sous forme d'une chaîne sans fin composée de plaques (1), (2) accouplées entre elles de manière articulée et présentant des empreintes (E) aptes à recevoir des ingrédients, l'ensemble du convoyeur étant assujetti à des organes de commande et de transfert pour amener successivement, pas à pas, les empreintes au regard de moyens d'embrochement aptes à engager une broche (P) dans chacune desdites empreintes en traversant les ingrédients,
**caractérisée en ce que** chaque empreinte (E) résulte de l'accouplement articulé d'au moins deux plaques juxtaposées (1) et (2) présentant chacune au moins une demi-empreinte (1a) et (2a) de sorte que, sous un effet de changement de plan, l'empreinte s'ouvre, permettant, d'une manière concomitante, l'éjection de la brochette (B) en combinaison avec des moyens de transfert et d'évacuation.

2. Machine selon la revendication 1, **caractérisée en ce que** chaque plaque (1) et (2) présente, d'une manière symétrique, deux demi-empreintes (1a) et (2a) formées à partir des bords latéraux.

3. Machine selon la revendication 2, **caractérisée en ce que** chaque demi empreinte (1a) et (2a) est en communication, à chaque extrémité, avec des dégagements débouchants (1) et (2c) pour l'introduction des broches (P).

4. Machine selon l'une quelconque des revendications 1 à 3, **caractérisée en ce que** les moyens de transfert et d'éjection sont constitués par des courroies sans (4) fin montées dans des gorges (1d) et (2d) formées transversalement dans le fond des empreintes (1a) et (2a) à partir de l'extérieur des plaques (1) et (2).

5. Machine selon la revendication 4, **caractérisée en ce que** les courroies (4) sont assujetties à des organes motorisés d'entraînement.

6. Machine selon l'une quelconque des revendications 1 à 5, **caractérisée en ce que**, à l'une des extrémités du convoyeur correspondant à l'évacuation des brochettes, est monté un rouleau de renvoi (5) coopérant avec les courroies (4) au moyen de gorges.

7. Machine selon la revendication 6, **caractérisée en ce que** le rouleau (5) est disposé à un niveau inférieur à celui défini par le plan supérieur du convoyeur, avec capacité de réglage en hauteur.

8. Machine selon la revendication 7, **caractérisée en ce que** le rouleau (5) est motorisé.

9. Machine selon l'une quelconque des revendications 5 à 8, **caractérisée en ce que**, à partir du rouleau, sont disposées d'autres courroies en alignement avec celles du convoyeur pour permettre la réception et l'évacuation des brochettes éjectées sous l'effet de l'ouverture des empreintes.

10. Machine selon l'une quelconque des revendications 1 à 9, **caractérisée en ce qu'**elle présente des agencements pour l'adaptation et le montage de modules d'embrochage et/ou de coupe et/ou d'alimentation en broches.

## Claims

1. Machine for the automatic production of brochettes (B) comprising a conveyor in the form of an endless chain comprising plates (1), (2) articulatedly linked together and having cavities (E) capable of accommodating ingredients, the entire conveyor being operated by control and transfer units in order to successively present, step-by-step, the cavities opposite means of skewering capable of placing a skewer (P) into each of said cavities so that it passes through the ingredients,
**characterised in that** each cavity (E) is the result of articulatedly linking at least two juxtaposed plates (1) and (2) each having at least one half-cavity (1a) and (2a) so that, due to the effect of a change of plane, the cavity opens, concomitantly allowing ejection of the brochette (B) in combination with transfer and removal means.

2. Machine as claimed in claim 1, **characterised in that** each plate (1) and (2) has two symmetrically arranged half-cavities (1a) and (2a) formed on their lateral edges.

3. Machine as claimed in claim 2, **characterised in that** each half-cavity (1a) and (2a) communicates, at either end, with through openings (1c) and (2c) that allow the insertion of skewers (P).

4. Machine as claimed in any of claims 1 to 3, **characterised in that** the means of transfer and removal consist of endless belts (4) mounted in grooves (1d) and (2d) that are formed transversely at the bottom of cavities (1a) and (2a) from outside plates (1) and (2).

5. Machine as claimed in claim 4, **characterised in that** belts (4) are operated by motor-driven units.

6. Machine as claimed in any of claims 1 to 5, **characterised in that**, at one of the ends of the conveyor that corresponds to the removal of the brochettes, a hitch roll (5) is mounted, which roll cooperates with belts (4) by means of grooves.

7. Machine as claimed in claim 6, **characterised in that** roll (5) is located at a level that is lower than that defined by the upper plane of the conveyor and **in that** it is height adjustable.

8. Machine as claimed in claim 7, **characterised in that** roll (5) is motor-driven.

9. Machine as claimed in any of claims 5 to 8, **characterised in that**, starting from the roll, there are other belts that are in alignment with the belts of the conveyor in order to allow receiving and removal of brochettes that are ejected due to the effect of the cavities being opened.

10. Machine as claimed in any of claims 1 to 9, **characterised in that** it has features for adapting and installing skewering modules and/or cutting modules and/or skewer feed modules.

## Patentansprüche

1. Maschine für die automatische Herstellung von Bratspießen (B) mit einem Förderband in Form einer Endloskette bestehend aus Platten (1), (2), die gelenkig miteinander verkoppelt sind, und Vertiefungen (E) für die Aufnahme der Zutaten aufweisen, wobei das gesamte Förderband von Steuer- und Transferorganen abhängig ist, um die Vertiefungen schrittweise nacheinander gegenüber von Aufspießeinrichtungen zu positionieren, die geeignet sind, in jede der besagten Vertiefungen einen Spieß (P) einzuführen und dabei die Zutaten zu durchbohren,
**dadurch gekennzeichnet, dass** jede Vertiefung (E) aus der gelenkigen Verkopplung von mindestens zwei nebeneinander liegenden Platten (1 und 2) resultiert, die jeweils mindestens eine Vertiefungshälfte (1a und 2a) aufweisen, so dass sich die Vertiefung unter Einwirkung einer Ebenenänderung öffnet und in Verbindung mit Transfer- und Abführungseinrichtungen den Auswurf des Spießes (B) ermöglicht.

2. Maschine nach Anspruch 1, **dadurch gekennzeichnet, dass** jede Platte (1 und 2) symmetrisch zwei Vertiefungshälften (1a und 2a) aufweist, die aus den seitlichen Rändern ausgebildet sind.

3. Maschine nach Anspruch 2, **dadurch gekennzeichnet, dass** jede Vertiefungshälfte (1a und 2a) an jedem Ende mit ausführenden Freiräumen (1c und 2c) für die Einführung der Spieße (P) in Verbindung steht.

4. Maschine nach Anspruch 1, 2 oder 3, **dadurch gekennzeichnet, dass** die Transfer- und Auswurfeinrichtungen aus Endlosriemen (4) bestehen, die in Auskehlungen (1d und 2d) sitzen, die ausgehend von der Außenseite der Platten (1 und 2) in Querrichtung am Boden der Vertiefungen (1a und 2a) ausgebildet sind.

5. Maschine nach Anspruch 4, **dadurch gekennzeichnet, dass** die Riemen (4) von motorisierten Antriebsorganen abhängig sind.

6. Maschine nach einem der vorhergehenden Ansprüche, **dadurch gekennzeichnet, dass** an dem der Abführung der Spieße entsprechenden Ende des Förderbandes eine Umlenkrolle (5) angebracht ist, die mittels Nuten mit den Riemen (4) zusammenwirkt.

7. Maschine nach Anspruch 6, **dadurch gekennzeichnet, dass** die Rolle (5) höhenverstellbar auf einer Höhe unterhalb derjenigen angeordnet ist, die von der oberen Ebene des Förderbandes beschrieben wird.

8. Maschine nach Anspruch 7, **dadurch gekennzeichnet, dass** die Rolle (5) motorisiert ist.

9. Maschine nach einem der Ansprüche 5 - 8, **dadurch gekennzeichnet, dass** ausgehend von der Rolle weitere Riemen in gleicher Ausrichtung wie diejenige des Förderbandes angeordnet sind, um die Aufnahme und Abführung der unter Einwirkung der Öffnung der Vertiefungen ausgeworfenen Spieße zu ermöglichen.

10. Maschine nach einem der Ansprüche 1 - 9, **dadurch gekennzeichnet, dass** sie Vorkehrungen für die Anpassung und Montage von Modulen für das Aufspießen und/oder Schneiden und/oder die Zuführung der Spieße aufweist.
